# EUROPÄISCHE PATENTSCHRIFT

(11) **EP 0 861 451 B1**
(45) Veröffentlichungstag und Bekanntmachung des Hinweises auf die Patenterteilung: **02.01.2003**
(21) Anmeldenummer: 96934290.6
(22) Anmeldetag: 25.10.1996
(51) Int. Cl.: G01V 15/00, G08B 13/24, E05B 73/00, H01F 7/02

(54) **LÖSEMAGNET FÜR DIEBSTAHLSICHERUNGEN VON VERKAUFSGEGENSTÄNDEN**
RELEASING MAGNET FOR ANTI-THEFT DEVICES FOR SALES GOODS
AIMANT AMOVIBLE POUR APPAREIL ANTIVOL POUR ARTICLES EN VENTE

(30) Priorität: 14.11.1995 CH 322695
(43) Veröffentlichungstag der Anmeldung: 02.09.1998
(73) Patentinhaber: Maurer, Albert, 8624 Grüt (CH)
(72) Erfinder: HOFSTETTER, Heinz, CH-8708 Männedorf (CH)
(74) Vertreter: Patentanwälte Feldmann & Partner AG
(86) Internationale Anmeldenummer: CH9600378
(87) Internationale Veröffentlichungsnummer: WO97018492

(56) Entgegenhaltungen:
- WO-A-94/09235
- US-A- 3 916 821
- US-A- 4 339 853
- US-A- 4 414 523
- US-A- 4 527 310

## Beschreibung

Die Erfindung betrifft einen Lösemagneten für Diebstahlsicherungen von Verkaufsgegenständen nach dem Oberbegriff des unabhängigen Patentanspruches.

Auf dem Markt sind Diebstahlsicherungen, insbesondere für Verkaufsgegenstände wie Textilien, Handtaschen usw. bekannt, welche durch die zu sichernden Gegenstände durchgesteckt werden. Beim unberechtigten Entfernen beschädigen sie die Gegenstände oder zerstören sie mindestens teilweise. Beispielsweise bestehen sie aus einem zweiteiligen an Kleidern durch Durchstecken befestigbaren Sicherungskörper. Diese beiden Teile können nur voneinander gelöst werden, wenn der eine Teil, welche mit automatisch klemmenden Schliessmitteln versehen ist, in einen topfförmige Oeffnung an einem Magneten zum Lösen gehalten wird. Dadurch werden die Schliessmittel magnetisch betätigt, die Klemmung gelöst und die beiden Teile können getrennt und aus dem Stoff entfernt werden, ohne diesen zu beschädigen. Die Lösemagnete weisen ein aus einem scheibenförmigen Kragen, welcher mit einem Zylinder verschraubt ist, bestehendes Gehäuse auf. Der eigentliche Lösemagnet, ein Permanentmagnet, ist im Zylinder eingespannt und von unten durch eine in den Zylinder eingeschraubte Platte gesichert. Alle diese Elemente sind aus Stahl. Der Lösemagnet ist nach oben gesichert durch einen eingepressten U-förmigen Deckel aus Leichtmetall oder Messing. Diese Lösemagnete werden in einem Tisch in einer Durchbohrung soweit eingelassen und von unten verschraubt, dass nur der Kragen die Oberfläche des Tisches überragt und mit seiner Unterseite auf der Tischplatte ohne Abstand anliegt.

Aus WO-A-94/09235 ist ein Lösemagnet der erwähnten Art bekannt. Der Lösemagnet ist dabei abstandslos von einer Keramikhülse umfasst. Diese ist ihrerseits von einem nicht näher beschriebenen Gehäuse gehalten. Hülse und Gehäuse weisen Öffnungen auf, so dass der Permanentmagnet eine freigelegte Fläche aufweist.

Diese Lösemagnete sind sehr teuer, da sie aus mehreren verschraubbaren Teilen bestehen. Sie weisen aus eben diesem

Grunde auch keine homogene Oberfläche auf. Sie sind schlecht zu reinigen und neigen zu Korrosion. Besonders anfällig auf Korrosion ist dabei der Magnet, da Luftfeuchtigkeit und Reinigungsmittel zwischen dem Deckel aus Leichtmetall oder Messing und dem Stahlzylinder eindringen kann. Weit verbreitet sind auch Lösemagnete, bei welchen die zu lösenden Sicherheitselemente direkt auf den Magneten auftreffen und in Kontakt gelangen. Dies führt oft zu beschädigungen und die hoch korrosiven Magnete sind direkt schädlichen Einflüssen von aussen ausgesetzt.

Aufgabe der Erfindung ist es, einen Lösemagneten genannter Art zu schaffen, welcher einerseits aus weniger Teilen besteht und daher billiger ist und andererseits so leicht zu reinigen ist, dass die Hygiene gewährleistet ist und allfällige Korrosion weitgehend verhindert ist.

Diese Aufgabe wird durch die in den Patentansprüchen angegebene Erfindung gelöst.

Der erfindungsgemässe Lösemagnet für Diebstahlsicherungen wird nachstehend im Zusammenhang mit den Zeichnungen beschrieben. Es zeigen:
- Figur 1: einen Lösemagneten in Aufsicht;
- Figur 2: den Lösemagneten in Seitenansicht; und
- Figur 3: den Lösemagneten im vertikalen Querschnitt.

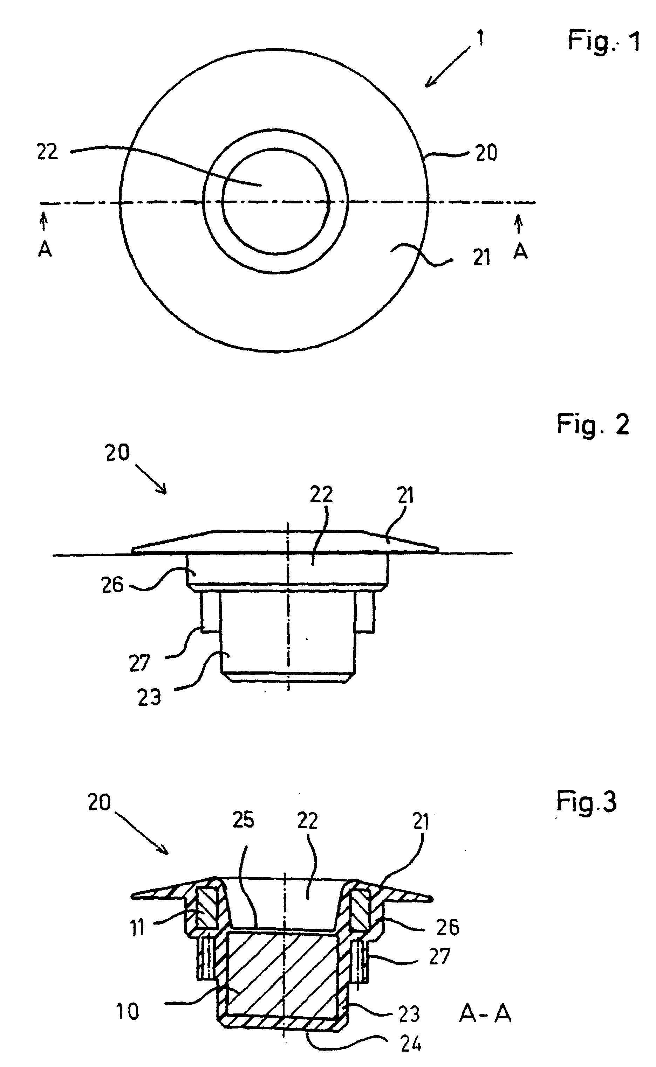

In der Aufsicht nach Figur 1 ist vom Lösemagneten 1 nur das Gehäuse 20 zusehen. Es weist einen runden Kragen 21 auf. Darin eingelassen ist eine ebenfalls runde Vertiefung 22 konzentrisch eingelassen. Die Vertiefung 22 entspricht in ihren Massen den Elementen der üblichen magnetisch lösbaren Diebstahlsicherungen. Zum lösen einer derartigen Diebstahlsicherung wird wie bekannt der zu entriegelnde Teil der Diebstahlsicherung in die Vertiefung 22 gehalten, worauf der Arretierstift am oberen Teil der Diebstahlsicherung aus dem entriegelten Teil herausgezogen werden kann.

In der Ansicht nach Figur 2 ist das Gehäuse 20 dargestellt. Es weist einen Kragen 21 auf, welcher, im auf einen Tisch montierten Zustand, mit seiner Unterseite auf dem Tisch aufliegt, wobei die anderen Teile sich innerhalb-dem Tisch selbst befinden und nicht ohne weiteres zugänglich sind. An der Unterseite der Kragens 21 schliesst sich eine erste zylindrische Fassung 26 an, welche einen Magnetkraftverstärkungsring 11 aufnimmt. An die erste Fassung 26 schliesst sich nach unten eine zweite zylindrische Fassung 23 an. Diese zweite zylindrische Fassung 23 umfasst den Permanentmagneten 10. Seitlich neben der zweiten Fassung 23, an diese und an die erste Fassung 26 anschliessend sind Befestigungsmittel 27 angeordnet. Die Befestigungsmittel 27 dienen der Befestigung des Lösemagneten in einem Tisch oder dergleichen. Die Befestigungsmittel 27 können als dübelähnliche Aufnahmestellen für Schrauben ausgestaltet sein. Es sind aber auch viele andere Arten zur Befestigung des Lösemagneten in einem Tisch denkbar.

Die Figur 3 zeigt den Lösemagneten im Querschnitt A-A gemäss der Figur 1 in vertikaler Richtung. Daraus ist gut ersichtlich, dass das Gehäuse 20 einstückig ist und sowohl Permanentmagnet 10 als auch den Magnetkraftverstärkungsring 11 mindestens annähernd vollständig und spaltfrei umfasst. Der Permanentmagnet 10 befindet sich in der zweiten Fassung 23 und ist nach unten von einem Boden 24 abgedeckt. Nach oben ist der durch eine Abdeckung 25 ebenfalls nahtlos abgedeckt. Die Abdeckung 25 bildet gleichzeitig einen Boden für die Vertiefung 22, welche der Aufnahme der zu entsprechenden Teile von Diebstahlsicherungen dient. Die erste Fassung 26 umfasst den Magnetkraftverstärkungsring 11 vollständig. An seinem oberen Ende geht er direkt über in den Kragen 21. Die Vertiefung 22 weist seitlich leicht einwärts geneigte Flanken auf, welche gleichzeitig den inneren Teil der ersten Fassung 26 bilden. Die Befestigungselemente sind in diesem Beispiel als seitliche Ansätze an der zweiten Fassung 23 ausgestaltet und mit vertikalen Bohrung zur Aufnahme von Schrauben versehen.

Der Magnetkraftverstärkungsring 11 ist annähernd zentrisch zum Permanentmagneten 10, oberhalb diesem im Gehäuse angeordnet. Dabei die Pole des Magnetverstärkungsringes 11 und des Permanentmagneten 10 so angeordnet, dass gleichartige Pole einander direkt gegenüber liegen und benachbart sind.

Die Herstellung des erfindungsgemässen Lösemagneten erfolgt vorzugsweise durch direkten einteiliges Umspritzen des Permanentmagneten 10 und des Magnetkraftverstärkungsringes 11 in einem einzigen Arbeitsgang. Der Magnetkraftverstärkungsring 11 ist in kleinem Abstand vom Permantentmagneten 10 auf. Sowohl der Permanentmagnet 10, wie auch der Magnetverstärkungsring 11 sind vom Material des Gehäuses 20 annähernd vollständig umfasst. Dies gibt dem Gehäuse 20 weitere Stabilität und verhindert jeden unerwünschent direkten Kontakt mit den magnetischen Werkstoffen. Aus spritztechnischen Gründen müssen allenfalls kleine Entlüftungslöcher vorgesehen werden. Diese werden dann im Boden 24 angeordnet und können anschliessend verschlossen werden. Es ist offensichtlich, dass der erfindungsgemässe Lösemagnet keine Spalten, keine Gewinde usw. aufweist. Daher kann weder Luftfeuchtigkeit noch Reinigungsmittel weder zum Magnetkraftverstärkungsring 11 noch zum Permanentmagneten 10 gelangen. Diese sind somit gegen Verschmutzung und Korrosion geschützt. Das Kunststoffgehäuse ist abwaschbar. Der Kragen 21 als flache und gegen aussen auslaufende Scheibe kann nicht von Zangen oder anderen Werkzeugen gefasst werden. Es ist auch nicht möglich, den Permanentmagneten durch Aufschrauben der inneren Teile herauszunehmen. Ein mutwilliges Beschädigen ist praktisch ausgeschlossen. Die erfindungsgemassen Lösemagnete können auch mit dem Gehäuse so ausgeführt sein, dass sie auf einem Tisch aufgebaut, von oben oder von unten angeschraubt uder festgeklebt werden können. Dazu kann der kragen auch am unteren Ende des Lösemagneten angeformt und mit den Befestigungslementen versehen sein.

## Patentansprüche

1. Löseinagnete (1) für Diebstahlsicherungen von Verkaufsgegenständen mit einem zylindrischen Permanentmagneten (10) und einem Gehäuse (20) mit einem scheibenförmigen Kragen (21) und Mitteln zum Befestigen des Gehäuses (27), **dadurch gekennzeichnet, dass** das Gehäuse (20) einteilig aus Kunststoff besteht und den Permanentmagneten (10) mindestens annähernd vollständig umfasst.

2. Lösemagnet nach Anspruch 1, **dadurch gekennzeichnet, dass** ein Magnetkraftverstärkungsring (11) zentrisch zum Permanentmagneten (10) oberhalb diesem im Gehäuse angeordnet ist, wobei gleichartige Pole des Magnetverstärkungsringes (11) und des Permanentmagneten (10) einander gegenüber liegen.

3. Lösemagnet nach Anspruch 2, **dadurch gekennzeichnet, dass** der Magnetkraftverstärkungsring (11) vom Permantentmagneten (10) beabstandet ist, wobei der Magnetverstärkungsring (11) mindestens annähernd vollständig vom Gehäuse umfasst ist.

4. Lösemanget nach Anspruch 1, **dadurch gekennzeichnet, dass** das einteilige Gehäuse eine Abdeckung (25) aufweist, welche den Permanentmagneten (10) gegen oben vollständig und spaltlos abdeckt.

5. Lösemagnet nach einem der Ansprüche 1 bis 4, **dadurch gekennzeichnet, dass** das Gehäuse (20) durch Umspritzen des Permanentmagneten (10) mit Kunststoff hergestellt ist.

6. Lösemagnet nach Anspruch 5, **dadurch gekennzeichnet, dass** der Permanentmagnet (10) und der Verstärkungsring (11) spaltlos umspritzt sind.

## Claims

1. A release magnet (1) for anti-theft devices for sales goods, with a cylindrical permanent magnet (10) and with a housing (20) with a disc-shaped collar (21) and means for fastening the housing (27), **characterised in that** the housing (20) consists as one-piece of plastic and encompasses the permanent magnet (10) at least approximately completely.

2. A release magnet according to claim 1, **characterised in that** a magnet force reinforcement ring (11) is arranged centrically to the permanent magnet (10) above this in the housing, wherein poles of the same type, of the magnet reinforcement ring (11) and of the permanent magnet (10), lie opposite one another.

3. A release magnet according to claim 2, **characterised in that** the magnet force reinforcement ring (11) is distanced to the permanent magnet (10), wherein the magnet reinforcement ring (11) is encompassed at least approximately completely by the housing

4. A release magnet according to claim 1, **characterised in that** the one-piece housing comprises a cover (25) which covers over the permanent magnet (10) to the top completely and without gaps.

5. A release magnet according to one of the claims 1 to 4, **characterised in that** the housing (20) is manufactured by injecting around the permanent magnet (10) with plastic.

6. A release magnet according to claim 5, **characterised in that** one injects without gaps around the permanent magnet (10) and the reinforcement ring (11).

## Revendications

1. Aimant amovible (1) pour dispositifs antivol placés sur des articles à vendre, comprenant un aimant permanent cylindrique (10) et un boîtier (20) doté d'un collet en forme de disque (21) et de moyens pour fixer le boîtier (20), **caractérisé en ce que** le boîtier (20) est d'un seul tenant et est composé de matière plastique et entoure au moins à peu près entièrement l'aimant permanent (10).

2. Aimant amovible selon la revendication 1, **caractérisé en ce que** l'anneau de renforcement de la force magnétique (11) est disposé dans le boîtier, au-dessus de l'aimant permanent (10) et de façon centrée par rapport à celui-ci, les pôles identiques de l'anneau de renforcement de la force magnétique (11) et de l'aimant permanent (10) étant chaque fois situés à l'opposé l'un de l'autre.

3. Aimant amovible selon la revendication 2, **caractérisé en ce que** l'anneau de renforcement de la force magnétique (11) est distant de l'aimant permanent (10), l'anneau de renforcement de la force magnétique (11) étant au moins à peu près entièrement entouré par le boîtier.

4. Aimant amovible selon la revendication 1, **caractérisé en ce que** le boîtier d'un seul tenant présente un recouvrement (25) qui recouvre complètement l'aimant permanent (10) en haut sans laisser de fente.

5. Aimant amovible selon l'une des revendications 1 à 4, **caractérisé en ce que** le boîtier (20) est fabriqué en extrudant de la matière plastique tout autour de l'aimant permanent (10).

6. Aimant amovible selon la revendication 5, **caractérisé en ce que** l'aimant permanent (10) et l'anneau de renforcement de la force magnétique (11) sont entourés par la matière plastique extrudée sans qu'il y ait de fente.
